# EUROPEAN PATENT SPECIFICATION

(11) **EP 4 365 230 B1**
(45) Date of publication and mention of the grant of the patent: **01.10.2025**
(21) Application number: 23206880.9
(22) Date of filing: 31.10.2023
(51) Int. Cl.: C08L 9/00, C08K 3/04, C08K 3/36, C08K 5/548, C08K 9/06, C08L 21/00, B60C 1/00

(54) **SILICA TREATED WITH A COUPLING AGENT AND POLYETHYLENE GLYCOL FOR A RUBBER COMPOSITION**
MIT EINEM KUPPLUNGSMITTEL UND POLYETHYLENGLYKOL BEHANDELTE KIESELSÄURE FÜR EINE KAUTSCHUKZUSAMMENSETZUNG
SILICE TRAITÉE PAR UN AGENT DE COUPLAGE ET POLYÉTHYLÈNE GLYCOL POUR UNE COMPOSITION DE CAOUTCHOUC

(30) Priority: 02.11.2022 US 202218052039
(43) Date of publication of application: 08.05.2024
(73) Proprietor: The Goodyear Tire & Rubber Company, Akron, OH 44316 (US)
(72) Inventor: HAHN, Bruce Raymond, Hudson, 44210 (US); PAPAKONSTANTOPOULOS, George Jim, Medina, 44256 (US); CHE, Justin Yinket, Akron, 44312 (US); XUE, Sky Tianxiang, Shanghai, 200031 (CN)
(74) Representative: Kutsch, Bernd

(56) References cited:
- EP-A1- 2 671 915
- EP-A1- 3 208 304
- EP-A1- 3 450 206
- US-A1- 2010 288 406

## Description

### BACKGROUND

The exemplary embodiment relates to a silica material that is suited to use in a rubber composition, especially for a tire tread, and more particularly for on-the-road tires.

Silica is a widely used filler in rubber compositions. Silica can be produced in a variety of forms, including fumed (or pyrogenic) silica and precipitated silica formed from silica gel. Processes have also been developed for preparing precipitated silica from rice husk ash by digesting amorphous silica present in the rice husk with sodium hydroxide to form sodium silicate and precipitating silica from sodium silicate by reaction with an acidifying agent, such as sulfuric acid or carbon dioxide. See, for example, WO 2001/74712, WO 2004/073600, and U.S. Pat. Nos. 5,833,940 and 11,027,981.

Precipitated silica is generally hydrophilic in nature and therefore has a greater affinity to itself, with less affinity to a diene-based elastomer in a rubber composition, which makes it difficult to obtain a satisfactory dispersion of the precipitated silica throughout the rubber composition. To address this, precipitated silica may be hydrophobized. Improvements in the affinity of the silica particles to a diene-based elastomer in a rubber composition and a more satisfactory dispersion of precipitated silica in a rubber composition can result.

Hydrophobization may be performed, for example, with an alkylsilane such as a halogenated alkylsilane or alkoxyalkylsilane, which reacts with hydroxyl groups on the precipitated silica. Silica coupling agents may also be used, where the coupling agent contains a first moiety (e.g., alkoxysilane moiety), which is capable of reacting with hydroxyl groups on the silica and a second moiety (e.g., a polysulfide moiety), which is capable of interacting with the diene-based elastomer(s) of the rubber composition. For example, U.S. Pat. No. 10,947,369 by Hahn, et al., describes a rubber composition containing a diene-based elastomer coupled to precipitated silica by a coupling agent. The precipitated silica is pretreated with an alkylsilane. Other methods for hydrophobization of precipitated silica may be found, for example, in U.S. Pat. Nos. 4,474,908, 5,780,538 and 6,573,324.

U.S. Patent No. 8,003,724 B2 describes allyl functionalized precipitated silica and rubber compositions containing such silica.

U.S. Patent No. 9,074,073 B2 describes a rubber composition formed by blending a conjugated diene-based elastomer, a combination of precipitated silica and rubber reinforcing carbon black as a reinforcing filler, a bis(3-triethoxysilylpropyl)polysulfide coupling agent, and a dimercaptothiadiazole.

U.S. Pub. No. 20220204351 A1 describes a method for making pre-hydrophobated precipitated silica from rice hull ash silica in an aqueous slurry using a silica coupling agent and a phase transfer agent.

One problem with some existing hydrophobized silicas is that the rubber compositions formed tend to have low stiffness. Another problem with some existing hydrophobized silicas is that compounding with natural rubbers can be difficult, due to the time needed at high temperatures to achieve thorough mixing in the earlier mixing stages. Another problem is that some silica coupling agents do not disperse well in aqueous solutions to allow for pretreatment of the silica.

There remains a need for a silica material which can overcome these problems and others.

### SUMMARY OF THE INVENTION

The invention relates to a silica material in accordance with claim 1, to a rubber composition in accordance with claim 7, to a tire tread in accordance with claim 11 and to a method in accordance with claim 12.

Dependent claims refer to preferred embodiments of the invention.

Aspects of the exemplary embodiment relate a silica material which is pretreated with a coupling agent and polyethylene glycol, to a method of preparing the pretreated silica material, to a rubber composition formed with pretreated silica material, to a method of forming the rubber composition, and to a shaped object, such as a tire, which includes the cured rubber composition.

Unexpectedly, pretreating amorphous silica with a combination of a coupling agent and a preferably relatively low molecular weight PEG is able to provide good compound consistency, with lower mixing times, and improved properties over conventional mixed silica and silane in rubber compounds.

While existing pretreated silica materials are able to provide rubber compositions with a low hysteresis behavior, they tend to suffer from a significant drop in compound stiffness. The exemplary pretreated silica results in rubber compounds with low hysteresis but also an increase in stiffness over conventional mixed silica/silane compositions. The resulting cured rubber compounds also show improved tensile and abrasion properties compared to conventional mixed silica/silane compositions.

In accordance with one preferred aspect of the exemplary embodiment, a pretreated silica material includes silica particles, an organosilane coupling agent bonded to the silica particles, and polyethylene glycol contacting the silica particles.

In the silica material, the silica particles may be precipitated silica. The silica particles may have a CTAB surface area of at least 30 m²/g or up to 300 m²/g. The silica particles may be derived from rice husk ash.

In the silica material, the organosilane coupling agent may include a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group. At least one of the hydrolyzable groups of the first reactive moiety may be selected from an alkoxy group and an aminoalkyl group. The coupling agent may be selected from bis(trialkoxysilylalkyl) polysulfides, bis(alkoxyaryloxysilylalkyl) polysulfides, bis(triaryloxysilylalkyl) polysulfides, and mixtures thereof.

In the silica material, the polyethylene glycol may have a molecular weight Mn of from 100 to 16,000, or no greater than 1500, or no greater than 600.

A rubber composition may include 100 phr of vulcanizable elastomers, at least 5 phr of said silica material, a carbon black reinforcing filler, one or more processing aids, and a sulfur-containing cure package.

In the rubber composition, the vulcanizable elastomers may include a styrene butadiene elastomer and a polybutadiene elastomer.

In the rubber composition, reinforcing fillers, other than the carbon black and the silica, may be present at no more than 10 phr. The processing aid(s) may include at least one of a resin, a wax, and a liquid plasticizer. The cure package may include a sulfur-based vulcanizing agent and at least one of a cure accelerator, a cure activator, a free radical initiator, and a cure inhibitor. The rubber composition may further include at least one of an antioxidant, an antidegradant, and an antiozonant.

A tire tread may be formed from the rubber composition.

In accordance with another preferred aspect of the exemplary embodiment, a method of forming a pretreated silica material includes forming a slurry comprising silica particles, an organosilane coupling agent and polyethylene glycol, heating the slurry to a temperature at which the organosilane coupling agent bonds with the silica particles, and drying the heated slurry to form the pretreated silica material.

In the method, the organosilane coupling agent and the polyethylene glycol may each be present in the slurry in an amount of at least 1 parts per hundred filler.

In accordance with another aspect of the exemplary embodiment, a method of forming a cured rubber composition includes mixing together 100 phr of vulcanizable elastomers including 60-80 phr styrene-butadiene elastomer and 20-40 phr polybutadiene; 0-10 phr (or 2-10 phr) of carbon black; 5-150 phr (or 10-120 phr) of silica particles pretreated with an organosilane coupling agent and polyethylene glycol; 0-70 phr (or 2-40 phr) resin; 0-70 phr or (5-40 phr) hydrocarbon oil; 0.5-5 phr paraffin wax; optionally, 0.5-6 phr of a p-phenylenediamine; 0-10 phr (or 1-10 phr) fatty acids; 0.5-10 phr of an organic cure accelerator; 0.5-7.0 phr zinc oxide; and 0.3-4.0 phr of elemental sulfur. The method further includes curing the mixture.

In the method, the curing may include heating the mixture to a temperature of at least 140°C.

The curing may include forming a tire tread including the cured rubber composition.

### BRIEF DESCRIPTION OF THE DRAWINGS

FIGURE 1 is a flow chart illustrating a method of forming a pretreated silica material in accordance with one aspect of the exemplary embodiment;
FIGURE 2 shows photomicrographs of untreated silica particles (FIG, 2A), silica particles treated with PEG alone (FIG. 2B), and silica particles treated with PEG and an organosilane coupling agent (FIG. 2C);
FIGURE 3 shows a plot of cured G' vs strain for sample rubber compositions; and
FIGURE 4 shows a plot of cured G' vs strain for sample rubber compositions.

### DETAILED DESCRIPTION OF PREFERRED EMBODIMEMNTS OF THE INVENTION

Aspects of the exemplary embodiment relate to a pretreated silica material that is useful as a reinforcing filler in rubber compositions. The exemplary pretreated silica material is able to provide compounding consistency, lower mixing times, and improved properties over conventional silica materials used in rubber compositions and shaped objects formed from the rubber compositions.

In various aspects, silica is treated, in an aqueous environment, with a combination of a coupling agent and polyethylene glycol (PEG). The pretreated silica material is recovered from the aqueous silica slurry, such as by drying, e.g., spray-drying. The pretreated silica material thus formed can then be compounded with one or more diene-based elastomers and suitable rubber-forming additives to form a rubber composition that is suited to use in a tire, in particular in a tire tread.

The pretreated silica material formed by this process provides an unexpected combination of compound properties. In particular, the pretreated silica material described herein results in rubber compounds with low hysteresis but also an increase in stiffness over conventional mixed silica/silane compounds. The resulting rubber compositions also show improved tensile and abrasion properties compared to conventional rubber compositions based on a mixture of silica and a silane.

The terms "rubber" and "elastomer," where used herein, may be used interchangeably, unless otherwise indicated. The terms "rubber composition," "compounded rubber" and "rubber compound," where used herein, are used interchangeably to refer to "rubber which has been blended or mixed with various ingredients and materials".

In the description of this invention, the term "phr" refers to parts of a respective material per 100 parts by weight of rubber, or elastomer. The term "phf" refers to parts per hundred filler, by weight.

The term "silica" is used herein to refer to silicon dioxide, SiO₂ (which may contain minor amounts of impurities, generally less than 1 wt. %, resulting from the process in which the silica is formed). The exemplary silica is precipitated silica. The term "precipitated silica" is used to refer to synthetic amorphous silica, typically obtained by a process in which a silicate is precipitated with an acidifying agent.

The term "pretreated silica material" or "pretreated silica" refers to silica that has been surface treated with a coupling agent and PEG prior to incorporating the pretreated silica into a rubber composition containing at least one vulcanizable elastomer.

The term "untreated silica" refers to silica prior to treatment with the coupling agent and PEG, for ease of differentiation from the "pretreated silica material."

The terms "cure" and "vulcanize" may be used interchangeably unless otherwise indicated.

The glass transition temperature (Tg) of an elastomer is determined by DIN 53445 at a heating rate of 1°C per minute unless otherwise indicated.

Molecular weight refers to the true molecular weight in g/mol of a polymer (copolymer or block of a copolymer). It is measured with gel permeation chromatography (GPC) using polystyrene calibration standards according to ASTM 5296-11 or equivalent. Mn (number average molecular weight), Mw (weight average molecular weight) and Mz (z average molecular weight) can be suitably determined together. For further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1.

CTAB surface area is measured according to ASTM D6845-20 "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammoniumbromide, commonly referred to as CTAB) molecules.

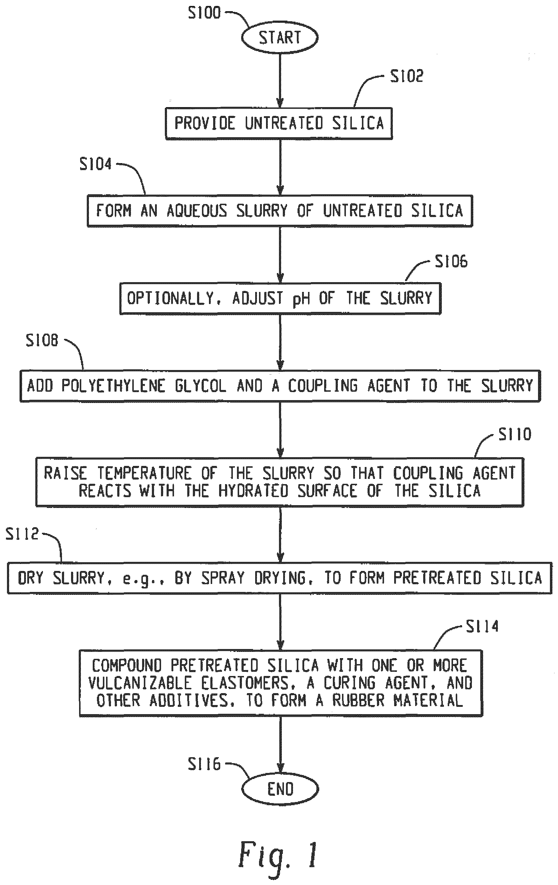

FIGURE 1 illustrates an exemplary method of preparing a pretreated silica material and incorporating the pretreated silica material into a rubber composition. The method begins at S100.

At S102, untreated silica is provided. The untreated silica may be a prewashed, wet filter cake of precipitated silica having hydroxyl groups thereon. The precipitated silica may be derived from rice husk ash or bagasse (sugar cane) ash, or the like, and need not be dried following washing and filtration of an acid-treated sodium silicate.

At S104, the untreated silica is diluted in water (or other aqueous medium that is predominantly water) to form an aqueous slurry. In one embodiment, the slurry may contain from 5-30 wt. % silica, or at least 10 wt. % silica. or other suitable dilution that is able to be pumped through a spray dryer.

At S106, the pH of the slurry may be adjusted, e.g., to a pH of 6-7.

At S108, polyethylene glycol and a coupling agent are added to the slurry, either in sequence, or at the same time, and are mixed with the untreated silica. In one embodiment, at least part of the polyethylene glycol is added first, to aid in dispersion of the silica, followed by addition of the coupling agent. S108 may be carried out at room temperature (e.g., under 30°C).

In another embodiment, one or both of the polyethylene glycol and the coupling agent is added to untreated precipitated silica prior to the filtration stage. This approach, however, may result in a loss of the additives during washing and/or filtration.

At S110, the temperature of the slurry is raised to (or maintained at) a temperature at which the coupling agent reacts with the hydrated surface of the silica, but which is below the boiling point of water, e.g., at least 20°C, or at least 40°C, or at least 60°C, or up to 95°C, or up to 90°C, such as 80-85°C. The silica coupling agent is allowed to react with the silica for a time which is sufficient to allow the silica coupling agent to react with the silica, specifically, with the hydroxyl groups present on the surface of the silica particles.

At S112, the slurry is dried, e.g., by spray drying, at a temperature above the boiling point of water, such as at least 130°C or at least 150°C. The dried product may be in the form of substantially spherical beads, granules, or a powder (all of which are generally referred to herein as particles).

At S114, the resulting pretreated silica may be compounded with one or more vulcanizable elastomers, other fillers, such as carbon black, processing aids, a curing agent, and optionally other additives, to form a cured rubber composition. The cured rubber composition may be in the shape of a tire tread, or a part thereof, a tire sidewall, or other shaped object.

The method ends at S116.

The organosilane coupling agent used at S108 may include a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group. At least one of the hydrolyzable groups of the first reactive moiety may be selected from an alkoxy group and an aminoalkyl group. The coupling agent may be selected from bis(trialkoxysilylalkyl) polysulfides, bis(alkoxyaryloxysilylalkyl) polysulfides, bis(triaryloxysilylalkyl) polysulfides, and mixtures thereof.

The pretreated silica material, which is formed at S112, preferably has a CTAB surface area of at least 30 m²/g, or at least 50 m²/g, or at least 100 m²/g, or at least 200 m²/g, or up to 500 m²/g, or up to 400 m²/g, or up to 300 m²/g.

In forming the rubber composition, the vulcanizable elastomers employed in S114 may include a styrene butadiene elastomer and a polybutadiene elastomer.

In one aspect, reinforcing fillers, other than the carbon black and the silica, may be present in the rubber composition at no more than 10 phr.

The processing aid(s) used in forming the rubber composition may include at least one of a resin, a wax, and a liquid plasticizer.

The cure package may include a sulfur-based vulcanizing agent and at least one of a cure accelerator, a cure activator, and a cure inhibitor.

The rubber composition may further include at least one of an antioxidant, an antidegradant, and an antiozonant.

A tire tread may be formed from the rubber composition.

### The Silica Material

In accordance with one aspect of the exemplary embodiment, a silica material, which may be formed by the method illustrated in FIGURE 1, includes silica particles with a combination of a coupling agent and a low molecular weight PEG thereon. Examples of these components will now be described in further detail.

### The Untreated Silica

The untreated silica may be a precipitated silica which is derived from rice husk ash (also known as rice hull ash) by digesting amorphous silica present in the rice husk with sodium hydroxide to form sodium silicate and precipitating silica from sodium silicate by reaction with an acidifying agent, such as sulfuric acid or carbon dioxide. The resulting silica precipitate is washed and filtered. U.S. Pub. Nos. 2002/0081247 A1 and U.S. Pat. No. 7,585,481 B2, for example, disclose methods for making rice hull ash silica that can be utilized herein. Other methods for the preparation of precipitated silica are disclosed in U.S. Pat Nos. 5,587,416 A, 5,800,608 A, 5,882,617 A, 6,107,226A, 6,180,076 B1, 6,221,149 B1, 6,268,424 B1, 6,335,396 B1, 9,334,169 B2, 9,359,215 B2, U.S. Pub. Nos. 20030118500 A1, 20040062701 A1, 20050032965 A1, and EP 0 647 591 A. Untreated silica may also be formed from silica gel as described, for example, in U.S. Pat. Nos. 5,708,069, 7,550,610, and 5,789,514. Silica gels may be derived, for example, by hydrophobating a silica hydrogel with, for example, an organomercaptosilane and alkyl silane and drying the product.

The untreated silica used in the method may have a CTAB surface area (if dried) of at least 30 m²/g, or at least 50 m²/g, or at least 90 m²/g, or at least 120 m²/g, or up to 500 m²/g, or up to 300 m²/g, as measured according to ASTM D6845-20, e.g., 30-300 m²/g. The untreated precipitated silica may have a pH of 6-8, resulting from residual sodium sulfate.

The untreated silica may have a particle size of less than 10 micrometers (µm), or less than 5 µm, or at least 0.01 µm, or up to 0.1µm, as determined by Differential Centrifugal Sedimentation (DSC).

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica may be used in the method. In other embodiments, the untreated precipitated silica is prepared as a wet filtered material shortly before use.

### The Polyethylene Glycol (PEG)

The polyethylene glycol may include, on average, two or more monomer units (n=2), such as at least four (n=4), or at least seven (n=7), or at least eight (n=8), or up to 360, or up to 80, or up to 60, or up to 40, or up to 20, or up to 12 monomer units. The polyethylene glycol preferably has a number average molecular weight Mₙ of at least 100 or at least 150, or at least 180, or at least 200, or at least 300, or up to 16,000, or up to 3500, or up to 1500, or up to 1000, or up to 600. In one embodiment, the PEG has an Mₙ of 200 or 400 or ina range of from 100 to 16000, preferably 200 to 600.

At relatively high molecular weights, the PEG tends to inhibit access to the surface of the silica by the coupling agent.

The polyethylene glycol is preferably used to form the treated silica at 0.1 parts per hundred filler (phf), or more (as determined on the dry weight of untreated silica), e.g., at least 1 phf, or at least 2 phf, or up to 50 phf, or up to 20 phf, or up to 12 phf, e.g., 2 to 20 phf.
The polyethylene glycol is preferably used in a range of from 1 to 20 phf, more preferably 2 to 12 phf.

### The Coupling Agent

The coupling agent is soluble in water and is able to bond with hydroxyl groups on the surface of the silica particles and with a polymer having one or more double bonds (e.g., C=C bonds), in particular, a diene-based elastomer.

In one embodiment, the coupling agent is a bifunctional organosilane coupling agent. Example organosilane coupling agents have first and second reactive moieties, which are connected by a bridging unit, such as a polysulfide and/or a hydrocarbylene bridge. The first of the reactive moieties includes a silicon atom and a readily hydrolyzable group, such as an alkoxy group, or an aminoalkyl group, attached to the silicon atom. The hydrolyzable group is capable of being hydrolyzed and, in the hydrolyzed form, to form a covalent bond with a silica particle. The second reactive moiety is capable of forming a bond with the polymer than includes one or more double bonds (e.g., C=C bonds), such as a diene-based elastomer, to form a covalent bond between the coupling agent and the polymer, e.g., via an elimination reaction. The second reactive moiety may be the same as the first reactive moiety, e.g., includes a silicon atom with an alkoxy group or an aminoalkyl group attached to the silicon atom, or may be a different moiety.

An illustrative coupling agent includes one or more alkoxy groups, such as a methoxy group or an ethoxy group (or groups), bonded directly to a silicon atom. In such coupling agents the alkoxy group hydrolyzes in the presence of moisture typically found on the surface of the silica to form the corresponding silanol which reacts with or condenses in the presence of the silica surface to bond the silicon atom to the silica surface. An organic group or groups attached to the silicon atom is/are thus available for chemical reaction with the polymer matrix during vulcanization. As a result, the polymer matrix may become chemically bonded to the silica particle, by means of the coupling agent, e.g., during cure or vulcanization of the polymer.

An example organosilane coupling agent may be of the general form: 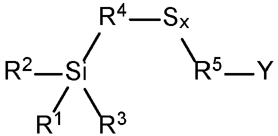 where at least one of R¹, R², and R³ is a hydrolyzable group, such as an alkoxy group, while the others of R¹, R², and R³ may also be hydrolyzable groups or unreactive groups, such as hydrogen; R⁴ and R⁵ are independently a hydrocarbylene group or a bond (i.e., absent); x is the number of connected sulfur atoms in the sulfur bridge and may be from 0-12, such as 1-8; Y is selected from H, an alkoxysilane (e.g., analogous to SiR¹(R²)(R³)), an alkylsilane, CN, a vinyl, an amine, an alkylthiol, an alkylamine, a methacrylate, a nitroso, a halogen group, and mixtures thereof.

In one embodiment, at least one of R⁴ and R⁵ is a hydrocarbylene group and/or wherein x is greater than 0.

A "hydrocarbylene group" is composed of carbon and hydrogen and may be aliphatic, aromatic, or a combination thereof. The hydrocarbylene group may be branched or unbranched.

Examples of suitable sulfur containing organosilanes which may be used as the coupling agent include: bis(trialkoxysilylalkyl) polysulfides, bis(alkoxyaryloxysilylalkyl) polysulfides and bis(triaryloxysilylalkyl) polysulfides, wherein the coupling agent includes a sulfur bridge of at least two sulfur atoms, or up to ten sulfur atoms, or up to eight sulfur atoms, where each alkoxy group, where present, includes from one to eighteen carbon atoms (e.g., methoxy, ethoxy, propoxy, butoxy); the aryloxy group, where present, includes from six to twelve carbon atoms and the alkyl group includes at least two carbon atoms, such as ethyl or propyl.

Specific examples of such coupling agents include: 3,3'-*bis*(triethoxysilylpropyl) disulfide, 3,3'-*bis*(triethoxysilylpropyl) trisulfide, 3,3'-*bis*(triethoxysilylpropyl) tetrasulfide, 3,3'-*bis*(triethoxysilylpropyl) octasulfide, 3,3'-*bis*(trimethoxysilylpropyl) disulfide, 3,3'-*bis*(trimethoxysilylpropyl) tetrasulfide, 2,2'-*bis*(triethoxysilylethyl) tetrasulfide, 3,3'-*bis*(trimethoxysilylpropyl) trisulfide, 3,3'-*bis*(tributoxysilylpropyl) disulfide, 3,3'-*bis*(trimethoxysilylpropyl) hexasulfide, 3,3'-*bis*(trimethoxysilylpropyl) octasulfide, 3,3'-*bis*(trioctoxysilylpropyl) tetrasulfide, 3,3'-*bis*(trihexoxysilylpropyl) disulfide, 3,3'-*bis*(tri-2"-ethylhexoxysilylpropyl) trisulfide, 3,3'-*bis*(triisooctoxysilylpropyl) tetrasulfide, 3,3'-*bis*(tri-t-butoxysilylpropyl) disulfide, 2,2'-*bis*(methoxydiethoxysilylethyl) tetrasulfide, 2,2'-*bis*(tripropoxysilylethyl) pentasulfide, 3,3'-*bis*(tricyclohexoxysilylpropyl) tetrasulfide, 3,3'-*bis*(tricyclopentoxysilylpropyl) trisulfide, 2,2'-*bis*(tri-2"-methylcyclohexoxysilylethyl) tetrasulfide, *bis*(trimethoxysilylmethyl) tetrasulfide, 3-methoxy ethoxy propoxysilyl 3'-diethoxybutoxy-silylpropyl tetrasulfide, 2,2'-*bis*(dimethyl methoxysilylethyl) disulfide, 2,2'-*bis*(dimethylsecbutoxysilylethyl) trisulfide, 3,3'-*bis*(methylbutylethoxysilylpropyl) tetrasulfide, 3,3'-*bis*(di-t-butylmethoxysilylpropyl) tetrasulfide, 2,2'-*bis*(phenylmethylmethoxysilylethyl) trisulfide, 3,3'-*bis*(diphenylisopropoxysilylpropyl) tetrasulfide, 3,3'-*bis*(diphenylcyclohexoxysilylpropyl) disulfide, 3,3'-*bis*(dimethylethylmercaptosilylpropyl) tetrasulfide, 2,2'-*bis*(methyldimethoxysilylethyl) trisulfide, 2,2'-*bis*(methylethoxypropoxysilylethyl) tetrasulfide, 3,3'-*bis*(diethylmethoxysilylpropyl) tetrasulfide, 3,3'-*bis*(ethyldi-secbutoxysilylpropyl) disulfide, 3,3'-*bis*(propyldiethoxysilylpropyl) disulfide, 3,3'-*bis*(butyldimethoxysilylpropyl) trisulfide, 3,3'-*bis*(phenyldimethoxysilylpropyl) tetrasulfide, 3-phenylethoxybutoxysilyl 3'-trimethoxysilylpropyl tetrasulfide, 4,4'-*bis*(trimethoxysilylbutyl) tetrasulfide, 6,6'-*bis*(triethoxysilylhexyl) tetrasulfide, 12,12'-*bis(*triisopropoxysilyldodecyl) disulfide, 18,18'-*bis*(trimethoxysilyloctadecyl) tetrasulfide, 18,18'-*bis*(tripropoxysilyloctadecenyl) tetrasulfide, 4,4'-*bis*(trimethoxysilyl-buten-2-yl) tetrasulfide, 4,4'-*bis*(trimethoxysilylcyclohexylene) tetrasulfide, 5,5'-*bis*(dimethoxymethylsilylpentyl) trisulfide, 3,3'-*bis*(trimethoxysilyl-2-methylpropyl) tetrasulfide, 3,3'-*bis*(dimethoxyphenylsilyl-2-methylpropyl) disulfide, and mixtures thereof.

Bis(3-triethoxysilylpropyl)polysulfides with an average of 2-5 sulfur atoms are commercially available as Si 69^{™} from Evonik (with an average of 3.7 connected sulfur atoms in the sulfur bridge), and Si 266^{™} from Evonik (with an average of 2.15 connected sulfur atoms).

Other suitable organosilane coupling agents include vinyl triethoxysilane, vinyl-tris-(beta-methoxyethoxy) silane, methacryloylpropyltrimethoxysilane, gamma-amino-propyltriethoxysilane, gamma-mercaptopropyltrimethoxysilane *bis*(2-triethoxysilyl-ethyl) tetrasulfide, *bis*(3-trimethoxysilylpropyl) tetrasulfide, *bis*(2-trimethoxysilyl-ethyl) tetrasulfide, 3-mercaptopropyl-triethoxy silane, 2-mercaptopropyl-trimethoxy silane, 2-mercaptopropyl-triethoxy silane, 3-nitropropyl-trimethoxysilane, 3-nitropropyl-triethoxysilane, 3-chloropropyl-trimethoxysilane, 3-chloropropyl-triethoxysilane, 2-chloropropyl-trimethoxysilane, 2-chloropropyl-triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropyl-benzothiazole tetrasulfide, 3-trimethoxysilylpropyl-methacrylate monosulfide, 3-trimethoxysilylpropyl-methacrylate monosulfide, and the like, and mixtures thereof. For example, 3-thiocyanatopropyl-triethoxy silane is commercially available as Si 264 from Sigma-Aldrich, and 3-mercaptopropyl-trimethoxy silane is available as Silquest^{™} A-189 from Momentive Performance Materials.

Other organosilane coupling agents include allyl silanes, such as allyltriethoxysilane, allyltrimethoxysilane, allyldimethylchlorosilane, allyltrichlorosilane, allylmethyldichlorosilane, diallylchloromethylsilane, diallyldichlorosilane and triallylchlorosilane, as described, for example, in U.S. Pat. No. 8,440,750B2.

Other suitable silane coupling agents are described in U.S. Pat. Nos. 5,827,912, 5,780,535, 6,005,027, 6,136,913, and 6,121,347.

The amount of the silane coupling agent used to form the pretreated silica may be at least 0.01 parts by weight per hundred parts by weight of filler ("phf," here, the untreated silica). In some embodiments, the amount of silica coupling agent may be at least 1 phf, or at least 2 phf, or at least 5 phf, or at least 8 phf, or at least 10 phf, or up to 50 phf, or up to 15 phf of the untreated precipitated silica, e.g., 2 to 15 phf.

A ratio, by weight, of the coupling agent to the polyethylene glycol is preferably at least 0.8:1 or at least 1:1, or at least 1.2:1 or up to 10:1, or up to 3:1.

Since the coupling agent and PEG are retained on the silica when the mixture is spray dried, the amount of each and the phf can readily be determined from the amounts of coupling agent and PEG added to the slurry and the dry weight of the pretreated silica product.

### Rubber Compositions

In another aspect of the exemplary embodiment, a rubber composition includes the exemplary pretreated silica material in an amount of at least 5 phr, or at least 10 phr, or at least 20 phr, or at least 50 phr, or up to 150 phr, or up to 120 phr, or up to 110 phr, or up to 100 phr, e.g., 10 to 150 phr. Put another way, the pretreated silica may be at least 2 wt. %, or at least 5 wt. %, or at least 10 wt. %, or at least 20 wt. %, or up to 60 wt. %, or up to 40 wt. % of the fully-formulated rubber composition.

In one embodiment, the rubber composition includes 100 phr of vulcanizable elastomers; at least 5 phr of the pretreated silica; optionally, one or more other reinforcing fillers, one or more processing aids, and a sulfur-containing cure package.

An exemplary rubber composition may include one or more elastomers, such as a mixture of elastomers, the exemplary pretreated silica, optionally, carbon black, one or more processing aids, such as oils and waxes, and a cure package including a cure agent and one or more cure accelerators/activators. Examples of these components are as follows:

### Elastomers

One or more sulfur vulcanizable elastomers may be used in the rubber composition. These elastomers may include at least one double bond, e.g., a C=C bond, such as diene-based elastomers. Examples of vulcanizable elastomers include natural rubber, synthetic polyisoprene, natural polyisoprene, styrene-butadiene copolymer, solution-polymerized styrene-butadiene (SSBR), emulsion-polymerized styrene-butadiene rubber (ESBR), butadiene rubber (BR), halobutyl rubber, e.g., bromobutyl rubber and chlorobutyl rubber, nitrile rubber, liquid rubbers, polynorbornene copolymer, isoprene-isobutylene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadiene-styrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, styrene butadiene copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alphaolefin monomers, polypropylene polymers, maleated polyolefins, polyester copolymers, copolyester polymers, ethylene acrylic acid copolymer, and/or polyvinyl acetate, and/or wherein the polymer optionally comprises a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

Suitable solution polymerized styrene-butadiene rubbers functionalized with an alkoxysilane group and a thiol group are available commercially, such as Sprintan^{™} SLR 4602 from Synthos. This elastomer has a Mooney viscosity of about 65, a bound styrene of about 21 wt. %, and a vinyl structure of about 49 wt. %. The functionalization improves interaction with silica and carbon black.

By convention, the total amount of elastomer in the rubber composition is 100 phr.

### Other Fillers

In some embodiments, the pretreated silica material may be combined with another silica material (other than the pretreated silica material), e.g., in a ratio by weight of pretreated silica material: other silica material(s) of from 20:80 to 95:5, e.g., at least 40:60 or at least 60:40. When combined with another silica, the total amount of silica in the rubber composition may be up to 150 phr, or up to 120 phr. In other embodiments, the pretreated silica material is the only form of silica used in the rubber composition.

Reinforcing fillers, other than silica, may be utilized, e.g., in amounts of at least 1 phr, or up to 80 phr, or up to 50 phr, or up to 20 phr, or up to 10 phr. Examples of such additional reinforcing fillers include carbon black, alumina, aluminum hydroxide, clay (reinforcing grades), magnesium hydroxide, boron nitride, aluminum nitride, titanium dioxide, reinforcing zinc oxide, and combinations thereof.

The carbon black may have a CTAB specific surface area of at least 100, or at least 102, or at least 104, or up to 120, or up to 118, or up to 116 m²/kg. Exemplary carbon blacks useful herein include ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products."

Carbon black may be the only reinforcing filler present in the rubber composition. It may be present, for example, in an amount of at least 2 phr, or at least 3 phr, or up to 20 phr, or up to 10 phr, or up to 5 phr. A ratio by weight of silica to carbon black in the rubber composition may be from 30:1 to 2:1, e.g., no more than 25:1 or at least 5:1. In some embodiments, carbon black is not employed in the rubber composition.

In some embodiments, one or more non-reinforcing fillers may be used in the rubber composition. Examples of such fillers include clay (non-reinforcing grades), graphite, magnesium dioxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N2SA) of 20 m²/g, or less, e.g., 10 m²/g or less. The N2SA surface area of a particulate material is determined according to ASTM D6556-21, "Standard Test Method for Carbon Black-Total and External Surface Area by Nitrogen Adsorption." In certain embodiments, non-reinforcing fillers may be particulate material that has a particle size of greater than 1000 nm. A total amount of non-reinforcing filler, when used may be 0.1 to 10 phr, or up to 5 phr, or up to 1 phr.

### Processing aids

Processing aids may be used at a total of at least 4 phr, or up to 100 phr, and may include one or more of liquid plasticizers, resins, waxes, antioxidants, antidegradants, antiozonants, and materials which provide two or more of these functionalities.

### Liquid Plasticizers (Including Oils and Non-Oils)

The tread rubber composition may include at least 5 phr, or up to 40 phr of liquid plasticizer, or up to 30 phr of liquid plasticizer. In other embodiments, liquid plasticizers are absent from the rubber composition.

The term liquid plasticizer is used to refer to plasticizer ingredients which are liquid at room temperature (i.e., liquid at 25°C and above). Hydrocarbon resins, in contrast to plasticizers, are generally solid at room temperature. Generally, liquid plasticizers have a Tg that below 0°C, generally well below 0°C, such as less than -30°C, or less than -40°C, or less than -50°C, such as a Tg of 0°C to -100°C.

Suitable liquid plasticizers include oils (e.g., petroleum-based hydrocarbon oils as well as plant-sourced oils) and non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). Petroleum based oils may include aromatic, naphthenic, low polycyclic aromatic (PCA) oils, and mixtures thereof. Plant oils may include oils harvested from vegetables, nuts, seeds, and mixtures thereof, such as triglycerides.

Suitable low PCA oils include those having a polycyclic aromatic content of less than 3 wt. % by weight as determined by the IP346 method (Standard Methods for Analysis & Testing of Petroleum and Related Products and British Standard 2000 Parts, 2003, 62nd edition, published by the Institute of Petroleum, UK). Exemplary petroleum sourced low PCA oils include mild extraction solvates (MES), treated distillate aromatic extracts (TDAE), TRAE, and heavy naphthenics. Exemplary MES oils are available commercially as CATENEX^{™} SNR from Shell, PROREX^{™} 15 and FLEXON^{™} 843 from ExxonMobil, and VIVATEC^{™} 200 from H&R Group. Exemplary TDAE oils are available as TYREX^{™} 20 from ExxonMobil, and VIVATEC^{™} 500 and VIVATEC^{™} 180 from H&R Group. Exemplary heavy naphthenic oils are available as SHELLFLEX^{™} 794 from Shell, and Hyprene^{™} Black Oil from Ergon. Exemplary plant-sourced oils include soy or soybean oil, sunflower oil (including high oleic sunflower oil), safflower oil, corn oil, linseed oil, cotton seed oil, rapeseed oil, cashew oil, sesame oil, camellia oil, jojoba oil, macadamia nut oil, coconut oil, and palm oil.

Exemplary ether plasticizers include polyethylene glycols, polypropylene glycols, and polybutylene glycols, including triesters and diesters of carboxylic acid, phosphoric acid, or sulphonic acid, and mixtures of these triesters. More specifically, exemplary carboxylic acid ester plasticizers include compounds selected from the group consisting of trimellitates, pyromellitates, phthalates, 1,2-cyclohexanedicarboxylates, adipates, azelates, sebacates, glycerol triesters, and mixtures thereof. Exemplary glycerol triesters include those which include at least 50 wt. % by weight, or at least 80 wt. % of an unsaturated C18 fatty acid (e.g., oleic acid, linoleic acid, linolenic acid, and mixtures thereof). Other exemplary carboxylic acid ester plasticizers include stearic acid esters, ricinoleic acid esters, phthalic acid esters (e.g., di-2-ethylhexyl phthalate and diisodecyl phthalate), isophthalic acid esters, tetrahydrophthalic acid esters, adipic acid esters (e.g., di(2-ethylhexyl)adipate and diisooctyl adipate), malic acid esters, sebacic acid esters (e.g., di(2-ethylhexyl)sebacate and diisooctyl sebacate), and fumaric acid esters. Exemplary phosphate plasticizers include those with a tri-hydrocarbyl phosphate or di-hydrocarbyl phosphate structure (where each hydrocarbyl is independently selected from C₁ to C₁₂ alkyl groups and substituted and un-substituted C₆ to C₁₂ aromatic groups. More specifically, exemplary phosphate plasticizers include trimethyl phosphate, triethyl phosphate, tributyl phosphate, trioctyl phosphate, dioctyl phosphate, 2-ethylhexyl diphenyl phosphate, tributoxyethyl phosphate, triphenyl phosphate, cresyl diphenyl phosphate, isodecyl diphenyl phosphate, tricresyl phosphate, tritolyl phosphate, trixylenyl phosphate, tris(chloroethyl) phosphate, and diphenyl mono-o-xenyl phosphate. Exemplary sulfonate plasticizers include sulfonic acid esters, such as sulfone butylamide, toluenesulfonamide, N-ethyl-toluenesulfonamide, and N-cyclohexyl-p-toluenesulfonamide.

The Tg of the oil or oils used may be -40°C to -100°C.

In some embodiments, the total amount of hydrocarbon resin and liquid plasticizer is at least 5 phr, or at least 15 phr, or at least 20 phr, or up to 70 phr, or up to 40 phr, or up to 30 phr.

### Resins

Suitable resins include hydrocarbon resins. Example hydrocarbon resins include aromatic, aliphatic, and cycloaliphatic resins, including terpenes and terpenoids. The hydrocarbon resin may have a Tg of at least 0°C, or at least 30°C, or up to 125°C, or up to 50°C. Hydrocarbon resin Tg can be determined by DSC, according to the procedure discussed above for elastomer Tg measurements. The hydrocarbon resin may have a softening point of at least 70°C, or up to 100°C. The softening point of a hydrocarbon resin is generally related to the Tg. The Tg is generally lower than its softening point, and the lower the Tg the lower the softening point.

In one embodiment, the hydrocarbon resin, where used, is present in the rubber composition in a total amount of at least 1 phr, at least 2 phr, at least 3 phr, or at least 5 phr, or up to 70 phr, or up to 50 phr, or up to 40 phr, or up to 30 phr, or up to 20 phr, or up to 10 phr. In other embodiments, hydrocarbon resins are absent from the rubber composition.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof.

Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic.

Specific examples of aromatic resins include coumarone-indene resins, alkyl-phenol resins, and vinyl aromatic homopolymer or copolymer resins. Examples of alkyl-phenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinylaromatic/aliphatic copolymer resins (e.g., CPD/styrene copolymer resin, and DCPD/styrene copolymer resin).

Other aromatic resins include terpene resins, such as alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof.

In one embodiment, the hydrocarbon resin includes a combination of aromatic and aliphatic/cycloaliphatic hydrocarbons. In such cases, the total amount of any aliphatic and/or cycloaliphatic resin used in combination with the aromatic resin may be no more than 5 phr, or less than 4 phr, or less than 3 phr, or more than 20% by weight, or no more than 15% or no more than 10% by weight of the overall amount of hydrocarbon resins.

The aromatic resin may have a Mw of at least 1000 grams/mole and/or up to 4000 grams/mole.

Other example resins which may be used in the rubber composition include tackifying resins, such as unreactive phenol formaldehyde, and stiffness resins, such as reactive phenol formaldehyde resins and resorcinol or resorcinol and hexamethylene tetramine, which may be used at 1 to 10 phr, with a minimum tackifier resin, if used, being 1 phr and a minimum stiffener resin, if used, being 3 phr. Other resins include benzoxazine resins, as described in U.S. Pub. No. 20220195153 to Papakonstantopoulos, et al.

A total amount of resin in the rubber composition may be at least 1 phr, or at least 5 phr, or up to 50 phr, or up to 20 phr, or up to 10 phr. In other embodiments, resins are absent from the rubber composition.

### Waxes

Suitable waxes, particularly microcrystalline waxes, may be of the type shown in The Vanderbilt Rubber Handbook (1978), pp. 346 and 347. Example waxes include C₂₂-C₆₀ saturated hydrocarbons, which may be branched or unbranched, and mixtures thereof. The wax(es), where used, may be present in the rubber composition at 1 to 5 phr. In other embodiments, waxes are absent from the rubber composition.

The waxes used may serve as antiozonants.

### Antioxidants, Antidegradants

Exemplary antioxidants include amine-based antioxidants, such as paraphenylenediamines (PPDs), e.g., diphenyl-p-phenylenediamine, N-(1,3-dimethylbutyl)-N'-phenyl-p-phenylenediamine (6PPD), diphenyl-p-phenylenediamine, and others, such as those disclosed in The Vanderbilt Rubber Handbook (1978), pages 344-346. Such antioxidants may also serve as antiozonants and may be used at from 0.1 to 5 phr, such as at least 0.3 phr, or at least 1 phr, or up to 3 phr. In other embodiments, antioxidants, such as paraphenylenediamines, are absent from the rubber composition.

Antidegradants, where used, may include amine based antidegradants and phenol-containing antidegradants, and may be used at from 1 to 5 phr. In other embodiments, antidegradants are absent from the rubber composition.

Phenol-containing antidegradants include polymeric hindered phenol antioxidants, and others, such as those included in The Vanderbilt Rubber Handbook (1978), pages 344-347.

### Cure Package

The cure package includes a vulcanizing agent and at least one of: a vulcanizing accelerator, a vulcanizing activator (e.g., zinc oxide, fatty acids, such as stearic acid, and the like), a free radical initiator, a vulcanizing inhibitor, and an anti-scorching agent.

### Vulcanizing agent

The vulcanization of the rubber composition is conducted in the presence of a vulcanizing agent, such as a sulfur-based vulcanizing agent and/or a peroxide-based vulcanizing agent.

Examples of suitable sulfur vulcanizing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur vulcanizing agents may be used in an amount of from 0.1 to 10 phr, such as at least 0.5 phr, or at least 1 phr, or up to 8 phr, or up to 5 phr. In other embodiments, sulfur vulcanizing agents are absent from the rubber composition.

### Cure Accelerators, Activators, Free Radical Initiators, and Inhibitors

Cure accelerators and activators act as catalysts for the vulcanization agent. Accelerators are used to control the time and/or temperature required for vulcanization and to improve the properties of the vulcanizate. In one embodiment, a single accelerator system may be used, i.e., primary accelerator. A primary accelerator may be used in amounts ranging from 0.5 to 3 phr. In another embodiment, combinations of two or more accelerators may be used. In this embodiment, a primary accelerator is generally used in the larger amount (0.5 to 2 phr), and a secondary accelerator is generally used in smaller amounts (0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of cure accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of such cure accelerators include thiazole and/or sulfenamide vulcanization accelerators, such as 2-mercaptobenzothiazole, 2,2'-dithiobis(benzothiazole) (MBTS), N-cyclohexyl-2-benzothiazole-sulfenamide (CBS), and N-tert-butyl-2-benzothiazole-sulfenamide (TBBS), guanidine vulcanization accelerators, such as diphenyl guanidine (DPG), and mixtures thereof. In tread compositions, thiuram accelerators may be omitted.

The amount of the vulcanization accelerator may be from 0.1 to 10 phr, e.g., at least 0.5 phr, or at least 1 phr, or up to 5 phr. In other embodiments, vulcanization accelerators are absent from the rubber composition.

Vulcanizing activators are additives used to support vulcanization. Generally, vulcanizing activators include both an inorganic and organic component. Zinc oxide is the most widely used inorganic vulcanization activator. Organic vulcanization activators include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The amount of inorganic vulcanization activator may be from 0.1 to 6 phr, or at least 0.5 phr, or at least 1 phr, or up to 4 phr. The amount of organic vulcanization activator may be from 0.1 to 10 phr, or at least 0.5 phr, or at least 1 phr, or at least 4 phr, or up to 8 phr. In other embodiments, one or both of inorganic and organic vulcanization activators are absent from the rubber composition.

Free radical initiators, which may be used in some embodiments, are sometimes known as redox initiators, and include combinations of chelated iron salts, sodium formaldehyde sulfoxylate, and organic hydroperoxides. Representative organic hydroperoxides include cumene hydroperoxide, paramenthane hydroperoxide, and tertiary butyl hydroperoxide. The free radical initiator may be used in combination with, or as an alternative to, a sulfur-based vulcanizing agent. The amount of free radical initiator, where used, may be 0.1 to 4 phr, or 0.5 to 2 phr. In other embodiments, free radical initiators are absent from the rubber composition.

Vulcanization inhibitors are used to control the vulcanization process and generally retard or inhibit vulcanization until the desired time and/or temperature is reached. Example vulcanization inhibitors include cyclohexylthiophthalimide.

The amount of vulcanization inhibitor, where used, may be 0.1 to 3 phr, or 0.5 to 2 phr. In other embodiments, vulcanization inhibitors are absent from the rubber composition.

### Preparing the Rubber Composition

Rubber compositions may be prepared by mixing a vulcanizable elastomer containing one or more double bonds, the pretreated silica, optionally other fillers, such as carbon black, and other rubber compounding ingredients, not including sulfur based rubber cure agents, in at least one mixing step with at least one mechanical mixer, usually referred to as "non-productive" mixing stage, or stage(s), to an elevated temperature under high shear rubber mixing conditions, followed by a final "productive" mixing step, or stage, in which a sulfur based cure package, such as sulfur and sulfur cure accelerators, is added and mixed therewith at a lower mixing temperature to avoid unnecessarily pre-curing the rubber mixture during the mixing stage. The rubber composition may be cooled to a temperature below 40 °C between each of the mixing stages. The term non-productive mixing stage refers to a mixing stage (or stages) where no vulcanizing agents or vulcanization accelerators are added. The term final productive mixing stage refers to the mixing stage where the vulcanizing agents and vulcanization accelerators are added into the rubber composition.

The mixing may be performed, for example, by kneading the ingredients together in a Banbury mixer or on a milled roll.

The non-productive mixing stages may be conducted at a temperature of 130°C to 200°C, e.g., for 2 minutes to a temperature of about 145°C. Once the cure package is added, the final master batch mixing stage may be carried out a temperature below the vulcanization temperature in order to avoid unwanted pre-cure of the rubber composition, e.g., no more than 120°C, such as 60°C to 120°C, e.g., for 2 minutes at a temperature of 115°C. When the cure package is thoroughly mixed, the temperature of the mixture may be raised to effect cure. Curing of the rubber composition may be carried out at a temperature of from 120°C to 200°C, e.g., at least 140°C, or up to 180°C, e.g., to a temperature of 150°C. Any of the usual vulcanization processes may be used, such as heating in a press or mold, or heating with superheated steam or hot air. Such tires can be built, shaped, molded and cured by various methods which are known and will be readily apparent to those having skill in such art. The cured rubber composition may in the shape of at least a part of a tire tread or a tire comprising it.

In one aspect of the exemplary embodiment, a tire is provided, the tire having a tread formed, at least in part, from the exemplary rubber composition. Other parts of the tire, such as the tire sidewalls, may additionally, or alternatively, be formed, at least in part, from a rubber composition as described herein. The tire may be a pneumatic tire for an on the road vehicle, such as an automobile truck, or a tire for an off road vehicle, airplane or the like.

The rubber composition is not limited to use in tires but may find application in rubber gloves, surgical instruments, and the like.

### Tire Tread Properties

The use of the rubber composition in tires, such as tire treads, may result in a tire having improved or desirable tread properties. These improved or desirable properties may include one or more of rolling resistance, snow or ice traction, wet traction, dry handling, and wear. Additional improved or desirable properties include elongation at break (Eb), tensile at break (Tb) and Tb×Eb.

### Example Compositions

Table 1 illustrates exemplary rubber compositions in accordance with aspects of the exemplary embodiment.

**TABLE 1: Example Rubber Compositions**

| Component | Example A (phr) | Example B (phr) |
|---|---|---|
| Styrene-Butadiene elastomer | 60-80 | 65-75 |
| Polybutadiene | 20-40 | 25-35 |
| Carbon Black | 2.0-10.0 | 3.0-6.0 |
| Pretreated silica | 5-150 | 10-120 |
| Resin | 2.0-50 | 3.0-8.0 |
| Hydrocarbon oil | 5-40 | 10-30 |
| Paraffin Wax | 0.5-5.0 | 1.0-3.0 |
| *p*-phenylenediamine, e.g., N-(1,3-dimethylbutyl)-N'-phenyl-*p*-phenylenediamine (6PPD) | 0.5-6.0 | 1.5-5.0 |
| Fatty acids, e.g., stearic acid | 1.0-10.0 | 2.0-8.0 |
| Thiazole cure accelerator, e.g., N-cyclohexyl benzothiazole-2-sulfenamide (CBS) | 0.5-4 | 1.0-2.5 |
| Guanidine cure accelerator, e.g., N,N'-diphenyl guanidine (DPG) | 0.2-5.0 | 1.0-3.0 |
| Zinc Oxide | 0.5-7.0 | 1.0-4.0 |
| Elemental Sulfur | 0.3-4.0 | 0.5-2.0 |

Without intending to limit the scope of the exemplary embodiment, the following examples illustrate preparation of the exemplary pretreated silica material, rubber compositions employing the pretreated silica material, and properties thereof.

### EXAMPLES

The following materials were obtained:
Untreated filtered and washed silica, prepared by digesting amorphous silica present in the rice husk with sodium hydroxide to form sodium silicate and precipitating silica from sodium silicate by reaction with sulfuric acid. The precipitated silica is washed and filtered.

Organosilane coupling agents: Si 69^{™} and Si 266^{™}, both bis(3-triethoxysilylpropyl)polysulfide, with an average of 3.7 and 2.15 connecting sulfur atoms in the polysulfidic bridge, respectively, from Evonik Industries.
Polyethylene glycol: 400 Mₙ PEG, Carbowax 400 from Dow.
Polyethylene glycol: 200 Mₙ PEG, Carbowax 400 from Dow.
Solution polymerized functional styrene-butadiene rubber (f-SSBR), Sprintan^{™} SLR 4602 from Synthos.
Solution polymerization-prepared cis-polybutadiene rubber (cis-PBD), BUD 1207^{™} from The Goodyear Tire & Rubber Company (which is prepared by nickel catalysis of 1,3-butadiene monomer).
Precipitated amorphous silica: Zeosil^{™} 1165 from Solvay, having a BET nitrogen surface area of about 165 m²/g and a CTAB surface area of about 160 m²/g.
Precipitated amorphous silica: Zeosil^{™} 200MP from Solvay, having a BET nitrogen surface area of about 212 m²/g and a CTAB surface area of about 196 m²/g.
Carbon black (CB): Rubber reinforcing HAF (high abrasion furnace) carbon black, ASTM designation N330.
Wax: blend of paraffinic and microcrystalline waxes.
Naphthenic Oil: process oil and petroleum plasticizer.
Resin: alpha methylstyrene resin, MK-2085 from Kolon Industries.
Cure Accelerator: N-cyclohexyl-2-benzothiazolesulfenamide (CBS).
Antioxidant and antiozonant: N-(1,3-Dimethylbutyl)-N'-phenyl-p-phenylenediamine (6PPD), Santoflex 6PPD from Eastman.
Vulcanization Activators: zinc oxide, diphenylguanidine, and stearic acid.

### EXAMPLE 1: Preparation of Pretreated Silicas

Silica samples S0-S19 are prepared from the precipitated silica as shown in Table 2. The untreated precipitated silica is mixed with water to form a slurry containing 80 wt.% water which is placed in a colloid mill. The PEG and coupling agent are added (where used). In examples S0-S10, the coupling agent and PEG, where used, are added at about the same time. In the samples S11-S18, PEG, where used, being added first and mixed, before adding the coupling agent and further mixing. The slurry is heated to the reaction temperature (about 80°C), while stirring. For those samples denoted high shear, high shear is applied for 4 minutes. The slurry is then spray dried with a spray drier, where dry air at 185°C is used. Samples with coupling agent are then heat treated for 2 minutes at 160°C. Note that Sample S9 is a repeat of S4 and S10 is a repeat of S8.

**TABLE 2: Sample treatment**

| Sample | Si 69^{™} phf | Si 266^{™} phf | PEG 200 phf | Shear |
|---|---|---|---|---|
| S0 | 0 | 0 | 0 | |
| S1 | 10 | 0 | 0 | |
| S2 | 10 | 0 | 2.5 | |
| S3 | 10 | 0 | 5 | |
| S4 | 10 | 0 | 10 | |
| S5 | 0 | 10 | 0 | |
| S6 | 0 | 10 | 2.5 | |
| S7 | 0 | 10 | 5 | |
| S8 | 0 | 10 | 10 | |
| S9 | 10 | 0 | 10 | |
| S10 | 0 | 10 | 10 | |
| S11 | 10 | | 2.5 | High |
| S12 | 10 | | | High |
| S13 | 10 | | 2.5 | |
| S14 | 10 | | | |
| S15 | | 10 | 2.5 | High |
| S16 | | 10 | | High |
| S17 | | 10 | 2.5 | |
| S18 | | 10 | | |
| S19 | | | 10 | |

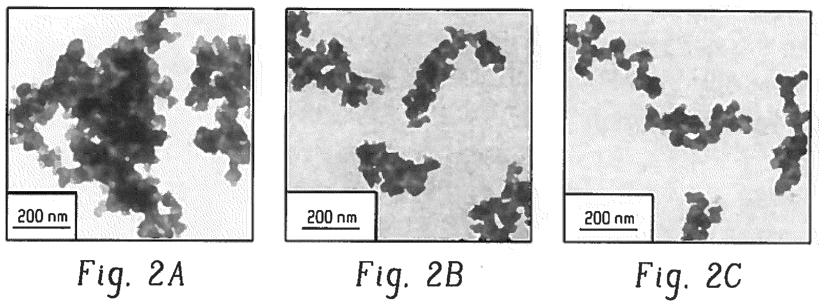

FIGURE 2A shows a photomicrograph of untreated silica particles (Sample S0), FIGURE 2B shows silica particles treated with PEG alone (S19), and FIGURE 2C shows silica particles treated with PEG and the Si69 coupling agent (S9). As can be seen, the untreated silica sample is highly agglomerated, while the other two samples, in contrast, are more disperse.

### EXAMPLE 2: Preparation of Rubber Compositions

Rubber compositions are prepared using samples from Example 1. The compounding process includes four mixing stages, the first three stages being non-productive and the fourth being a productive stage. In the first stage, the elastomers, silica from Example 1 (or Zeosil^{™}1165) and other additives are blended with a mixer. In the second stage, more silica filler is added. In the third stage, mixing only is performed. In the fourth stage, vulcanizing agent (sulfur) and other vulcanizing additives are incorporated. In between each stage, the mixture is allowed to cool.

Rubber compositions are formulated as shown in Table 3. All amounts are expressed in phr. All Examples use the same amount (phr) of carbon black, waxes, stearic acid, and 6-PPD. In Examples 1-3, the coupling agent is added in the second mixing stage, rather than as a pretreated silica.

C refers to a Control sample (where the silica is not pretreated with the coupling agent and PEG).

**TABLE 3: Rubber Formulations (phr)**

| **Sample** | **1** | **2** | **3** | **4** | **5** | **6** | **7** |
|---|---|---|---|---|---|---|---|
| Silica type | C | C | S0 | S1 | S2 | S3 | S4 |
| 1st STAGE | | | | | | | |
| SSBR | 70 | 70 | 70 | 70 | 70 | 70 | 70 |
| cis-PBD | 30 | 30 | 30 | 30 | 30 | 30 | 30 |
| Zeosil^{™} 1165 | 65 | 65 | | | | | |
| Carbon Black | 4 | 4 | 4 | 4 | 4 | 4 | 4 |
| Wax | 1.5 | 1.5 | 1.5 | 1.5 | 1.5 | 1.5 | 1.5 |
| Stearic Acid | 5 | 5 | 5 | 5 | 5 | 5 | 5 |
| 6PPD | 0.5 | 0.5 | 0.5 | 0.5 | 0.5 | 0.5 | 0.5 |
| S0 | | | 65 | | | | |
| S1 | | | | 68 | | | |
| S2 | | | | | 68 | | |
| S3 | | | | | | 68 | |
| S4 | | | | | | | 68 |
| Oil | 20 | 20 | 20 | 20 | 20 | 20 | 20 |
| TOTAL PHR | 196 | 196 | 196 | 199 | 199 | 199 | 199 |

| SECOND STAGE | | | | | | | |
|---|---|---|---|---|---|---|---|
| PHR from 1st: | 196 | 196 | 196 | 199 | 199 | 199 | 199 |
| Zeosil^{™} 1165 | 25 | 25 | | | | | |
| Oil | 7 | 7 | 7 | 7 | 7 | 7 | 7 |
| Resin | 7 | 7 | 7 | 7 | 7 | 7 | 7 |
| Si266^{™} | 9 | | 9 | | | | |
| Si69^{™} | | 9 | | | | | |
| 6PPD | 1.5 | 1.5 | 1.5 | 1.5 | 1.5 | 1.5 | 1.5 |
| S0 | | | 25 | | | | |
| S1 | | | | 25 | | | |
| S2 | | | | | 25 | | |
| S3 | | | | | | 25 | |
| S4 | | | | | | | 25 |
| TOTAL PHR | 245.5 | 245.5 | 245.5 | 239.5 | 239.5 | 239.5 | 239.5 |

| 4^{TH} STAGE | | | | | | | |
|---|---|---|---|---|---|---|---|
| PHR from 3rd: | 245.5 | 245.5 | 245.5 | 239.5 | 239.5 | 239.5 | 239.5 |
| CBS | 1.5 | 1.5 | 1.5 | 1.5 | 1.5 | 1.5 | 1.5 |
| Sulfur | 1.5 | 1.03 | 1.5 | 1.5 | 1.72 | 1.5 | 1.6 |
| Diphenyl guanidine | 2 | 2 | 2 | 2 | 2 | 2 | 2 |
| Zinc oxide | 1.5 | 1.5 | 1.5 | 1.5 | 1.5 | 1.5 | 1.5 |
| TOTAL PHR | 252 | 251.53 | 252 | 246 | 246.22 | 246 | 246.1 |

**TABLE 3: Rubber Formulations (phr)(continued)**

| **Sample** | **8** | **9** | **10** | **11** | **12** | **13** |
|---|---|---|---|---|---|---|
| Silica type | S5 | S6 | S7 | S8 | S9 | S10 |
| 1^{st} STAGE | | | | | | |
| SSBR | 70 | 70 | 70 | 70 | 70 | 70 |
| cis-PBD | 30 | 30 | 30 | 30 | 30 | 30 |
| Zeosil^{™} 1165 | | | | | | |
| CB | 4 | 4 | 4 | 4 | 4 | 4 |
| Wax | 1.5 | 1.5 | 1.5 | 1.5 | 1.5 | 1.5 |
| Stearic Acid | 5 | 5 | 5 | 5 | 5 | 5 |
| 6PPD | 0.5 | 0.5 | 0.5 | 0.5 | 0.5 | 0.5 |
| S5 | 68 | | | | | |
| S6 | | 68 | | | | |
| S7 | | | 68 | | | |
| S8 | | | | 68 | | |
| S9 | | | | | 68 | |
| S10 | | | | | | 68 |
| Processing Oil | 20 | 20 | 20 | 20 | 20 | 20 |
| TOTAL PHR | 199 | 199 | 199 | 199 | 199 | 199 |

| 2^{ND} STAGE | | | | | | |
|---|---|---|---|---|---|---|
| PHR FROM 1st: | 199 | 199 | 199 | 199 | 199 | 199 |
| Zeosil^{™} 1165 | | | | | | |
| Processing Oil | 7 | 7 | 7 | 7 | 7 | 7 |
| Resin | 7 | 7 | 7 | 7 | 7 | 7 |
| Si266^{™} | | | | | | |
| Si69^{™} | | | | | | |
| 6PPD | 1.5 | 1.5 | 1.5 | 1.5 | 1.5 | 1.5 |
| S5 | 25 | | | | | |
| S6 | | 25 | | | | |
| S7 | | | 25 | | | |
| S8 | | | | 25 | | |
| S9 | | | | | 25 | |
| S10 | | | | | | 25 |
| TOTAL PHR | 239.5 | 239.5 | 239.5 | 239.5 | 239.5 | 239.5 |

| 4^{th} STAGE | | | | | | |
|---|---|---|---|---|---|---|
| PHR FROM 3rd: | 239.5 | 239.5 | 239.5 | 239.5 | 239.5 | 239.5 |
| CBS | 1.5 | 1.5 | 1.5 | 1.5 | 1.5 | 1.5 |
| Sulfur | 1.5 | 1.95 | 1.03 | 1.5 | 1.5 | 1.5 |
| Diphenyl guanidine | 2 | 2 | 2 | 2 | 2 | 2 |

| **Sample** | **8** | **9** | **10** | **11** | **12** | **13** |
|---|---|---|---|---|---|---|
| Silica type | S5 | S6 | S7 | S8 | S9 | S10 |
| Zinc oxide | 1.5 | 1.5 | 1.5 | 1.5 | 1.5 | 1.5 |
| TOTAL PHR | 246 | 246.45 | 245.53 | 246 | 246 | 246 |

### Example 3

Additional rubber compositions (Samples 14-24) are prepared as for Example 2, using the pretreated silicas S11-S18 and control samples, except that the control samples 14 and 15 are heat treated for 2 minutes at 160°C, while those containing the pretreated silica are dropped at 160°C without further heat treatment. The rubber compositions include the components shown in Table 4:

**TABLE 4: Rubber Formulations (phr)**

| **Sample** | **14** | **15** | **16** | **17** | **18** | **19** | **20** |
|---|---|---|---|---|---|---|---|
| Silica type | C | C | S0 | S11 | S12 | S13 | S14 |
| 1st STAGE | | | | | | | |
| SSBR | 70 | 70 | 70 | 70 | 70 | 70 | 70 |
| cis-PBD | 30 | 30 | 30 | 30 | 30 | 30 | 30 |
| Zeosil^{™} 1165 | 65 | 65 | | | | | |
| Carbon Black | 4 | 4 | 4 | 4 | 4 | 4 | 4 |
| Wax | 1.5 | 1.5 | 1.5 | 1.5 | 1.5 | 1.5 | 1.5 |
| Stearic Acid | 5 | 5 | 5 | 5 | 5 | 5 | 5 |
| 6PPD | 0.5 | 0.5 | 0.5 | 0.5 | 0.5 | 0.5 | 0.5 |
| S0 | | | 65 | | | | |
| S11 | | | | 68 | | | |
| S12 | | | | | 68 | | |
| S13 | | | | | | 68 | |
| S14 | | | | | | | 68 |
| Processing Oil | 20 | 20 | 20 | 20 | 20 | 20 | 20 |
| TOTAL PHR | 196 | 196 | 196 | 199 | 199 | 199 | 199 |

| SECOND STAGE | | | | | | | |
|---|---|---|---|---|---|---|---|
| PHR from 1st: | 196 | 196 | 196 | 199 | 199 | 199 | 199 |
| Zeosil^{™} 1165 | 25 | 25 | | | | | |
| Oil | 7 | 7 | 7 | 7 | 7 | 7 | 7 |
| Resin | 7 | 7 | 7 | 7 | 7 | 7 | 7 |
| Si266^{™} | 9 | | 9 | | | | |
| Si69^{™} | | 9 | | | | | |
| 6PPD | 1.5 | 1.5 | 1.5 | 1.5 | 1.5 | 1.5 | 1.5 |
| S0 | | | 25 | | | | |
| S11 | | | | 25 | | | |
| S12 | | | | | 25 | | |
| S13 | | | | | | 25 | |
| S14 | | | | | | | 25 |
| TOTAL PHR | 245.5 | 245.5 | 245.5 | 239.5 | 239.5 | 239.5 | 239.5 |

| 4^{TH} STAGE | | | | | | | |
|---|---|---|---|---|---|---|---|
| PHR from 3rd: | 245.5 | 245.5 | 245.5 | 239.5 | 239.5 | 239.5 | 239.5 |
| CBS | 1.5 | 1.5 | 1.5 | 1.5 | 1.5 | 1.5 | 1.5 |
| Sulfur | 1.5 | 1.03 | 1.5 | 1.5 | 1.5 | 1.5 | 1.5 |
| Diphenyl guanidine | 2 | 2 | 2 | 2 | 2 | 2 | 2 |
| Zinc oxide | 1.5 | 1.5 | 1.5 | 1.5 | 1.5 | 1.5 | 1.5 |
| TOTAL PHR | 252 | 251.53 | 252 | 246 | 246 | 246 | 246 |

**TABLE 4: Rubber Formulations (phr)(continued)**

| **Sample** | **21** | **22** | **23** | **24** |
|---|---|---|---|---|
| Silica type | S15 | S16 | S17 | S18 |
| 1^{st} STAGE | | | | |
| SSBR | 70 | 70 | 70 | 70 |
| cis-PBD | 30 | 30 | 30 | 30 |
| Zeosil^{™} 1165 | | | | |
| CB | 4 | 4 | 4 | 4 |
| Wax | 1.5 | 1.5 | 1.5 | 1.5 |
| Stearic Acid | 5 | 5 | 5 | 5 |
| 6PPD | 0.5 | 0.5 | 0.5 | 0.5 |
| S15 | 68 | | | |
| S16 | | 68 | | |
| S17 | | | 68 | |
| S18 | | | | 68 |
| Processing Oil | 20 | 20 | 20 | 20 |
| TOTAL PHR | 199 | 199 | 199 | 199 |

| 2^{ND} STAGE | | | | |
|---|---|---|---|---|
| PHR FROM 1st: | 199 | 199 | 199 | 199 |
| Zeosil^{™} 1165 | | | | |
| Processing Oil | 7 | 7 | 7 | 7 |
| Resin | 7 | 7 | 7 | 7 |
| Si266^{™} | | | | |
| Si69^{™} | | | | |
| 6PPD | 1.5 | 1.5 | 1.5 | 1.5 |
| S15 | 25 | | | |
| S16 | | 25 | | |
| S17 | | | 25 | |
| S18 | | | | 25 |
| TOTAL PHR | 239.5 | 239.5 | 239.5 | 239.5 |

| 4^{th} STAGE | | | | |
|---|---|---|---|---|
| PHR FROM 3rd: | 239.5 | 239.5 | 239.5 | 239.5 |
| CBS | 1.5 | 1.5 | 1.5 | 1.5 |
| Sulfur | 1.5 | 1.5 | 1.5 | 1.5 |
| Diphenyl guanidine | 2 | 2 | 2 | 2 |
| Zinc oxide | 1.5 | 1.5 | 1.5 | 1.5 |
| TOTAL PHR | 246 | 246 | 246 | 246 |

### Properties of the Rubber Compositions

The following tests were performed on the rubber compositions.

Cure properties are determined according to the method described in ASTM D2084-19a, "Standard Test Method for Rubber Property-Vulcanization Using Oscillating Disk Cure Meter," using a Monsanto oscillating disc rheometer (MDR) which is operated at a temperature of 150° C and at a frequency of 11 hertz. A description of oscillating disc rheometers can be found in the Vanderbilt Rubber Handbook edited by Robert O. Ohm (Norwalk, Conn., R. T. Vanderbilt Company, Inc., 1990), pages 554-557. The use of this cure meter and standardized values read from the curve are specified in ASTM D-2084. A typical cure curve obtained on an oscillating disc rheometer is shown on page 555 of the 1990 edition of the Vanderbilt Rubber Handbook.

In such an oscillating disc rheometer, compounded rubber samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected from changes in torque.

The storage modulus is determined with a Rubber Process Analyzer (RPA). In the present case, storage modulus values are determined at 1% and 10% strain.

The T values are the minutes to the stated % of the torque increase. For example, T90 is the time in minutes to reach 90% of the Delta Torque. Delta Torque is the difference between maximum and minimum torque.

Tensile properties are measured with an Automated Testing System instrument by the Instron Corporation. Such instrument may determine ultimate tensile, ultimate elongation, modulii, etc.

Results are shown in Tables 5 and 6, for the samples tested.

**TABLE 5: Properties of Example 2 Rubber Compositions**

| **Sample** | **1** | **2** | **3** | **4** | **5** | **6** | **7** | **8** |
|---|---|---|---|---|---|---|---|---|
| Silica type | C | C | S0 | S4 | S5 | S6 | S7 | S8 |
| **Cure Properties - MDR 150°C** | | | | | | | | |
| Min. Torque (dNm) | 2.05 | 2.34 | 2.09 | 2.74 | 4.44 | 3.94 | 3.74 | 3.29 |
| Max. Torque (dNm) | 19.35 | 18.81 | 19.15 | 24.63 | 21.15 | 19.56 | 17.49 | 21.84 |
| Delta Torque (dNm) | 17.3 | 16.47 | 17.06 | 21.89 | 16.71 | 15.62 | 13.75 | 18.55 |
| T2 (min) | 0.43 | 0.49 | 0.35 | 0.3 | 0.2 | 0.29 | 0.27 | 0.25 |
| T25 (min) | 5.63 | 5.07 | 5.34 | 2.72 | 4.49 | 4.03 | 4.03 | 2.67 |
| T90 (min) | 14.08 | 14.66 | 12.32 | 7.74 | 9.37 | 7.59 | 7.82 | 6.87 |

| **Tensile Properties** | | | | | | | | |
|---|---|---|---|---|---|---|---|---|
| Modulus at 25% Elongation (MPa) | 1.08 | 1.07 | 1.03 | 1.29 | 1 | 1.02 | 0.97 | 1.11 |
| Modulus at 100% Elongation (MPa) | 2.4 | 2.71 | 2.18 | 3.33 | 2.14 | 2.17 | 2.03 | 2.65 |
| Modulus at 300% Elongation (MPa) | 9.94 | 12.49 | 10.26 | 12.84 | 9.02 | 9.89 | 8.46 | 10.55 |
| Tensile stress at Maximum (MPa) | 15.204 | 17.277 | 17.533 | 18.625 | 15.451 | 15.262 | 15.266 | 16.657 |
| Elongation at Break (%) | 407.312 | 382.701 | 444.467 | 414.423 | 444.324 | 410.358 | 467.518 | 434.15 |
| Energy at Maximum (J) | 11.154 | 12.205 | 15.763 | 17.021 | 14.052 | 12.988 | 13.345 | 14.31 |
| Energy at 300% Elongation (J) | 5.423 | 6.71 | 6.058 | 8.394 | 5.522 | 6.013 | 4.542 | 6.211 |

| **Rubber Process Analyzer at 100°C** | | | | | | | | |
|---|---|---|---|---|---|---|---|---|
| Pre-cure Storage Modulus G' at 0.833 Hz (kPa) | 186.361 | 222.153 | 197.757 | 211.398 | 320.257 | 281.871 | 260.21 | 229.931 |
| Storage Modulus G' at 1% strain (kPa) | 3152.637 | 2733.838 | 3212.302 | 3967.437 | 3824.637 | 3252.467 | 3103.574 | 3687.669 |
| Storage Modulus G' at 10% strain (kPa) | 1860.192 | 1829.667 | 1874.943 | 2481.94 | 2055.481 | 1911.562 | 1848.054 | 2197.484 |
| tan Δ at 10% strain | 0.14 | 0.114 | 0.14 | 0.121 | 0.151 | 0.143 | 0.153 | 0.137 |

**TABLE 6:Properties of Example 3 Rubber Compositions**

| **Sample** | **14** | **15** | **16** | **17** | **18** | **19** |
|---|---|---|---|---|---|---|
| Silica type | C | C | S0 | S11 | S12 | S13 |
| **Cure Properties - MDR 150°C** | | | | | | |
| Min. Torque (dNm) | 1.96 | 2.43 | 1.97 | 3.40 | 5.01 | 3.91 |
| Max. Torque (dNm) | 18.35 | 17.64 | 19.10 | 19.81 | 24.23 | 20.72 |
| Δ Torque (dNm) | 16.39 | 15.21 | 17.13 | 16.41 | 19.22 | 16.81 |
| T10 (min) | 4.81 | 3.79 | 4.03 | 3.63 | 3.85 | 3.66 |
| T25 (min) | 6.57 | 5.93 | 4.97 | 4.71 | 5.51 | 4.76 |
| T90 (min) | 16.11 | 15.61 | 10.19 | 10.48 | 15.42 | 10.56 |

| **Tensile Properties** | | | | | | |
|---|---|---|---|---|---|---|
| Modulus at 100% Elongation (MPa) | 2.22 | 2.43 | 1.57 | 2.57 | 2.20 | 2.62 |
| Modulus at 300% Elongation (MPa) | 9.49 | 11.71 | 6.22 | 11.65 | 10.05 | 11.60 |
| Tensile stress at Maximum (MPa) | 17.5 | 17.9 | 13.1 | 18.7 | 16.8 | 18.0 |
| Elongation at Break (%) | 478.9 | 411.4 | 486.2 | 440.6 | 439.2 | 426.1 |
| Energy at Max. (J) | 15.87 | 12.88 | 10.49 | 15.40 | 13.88 | 15.74 |
| Energy at 300% Elongation (J) | 5.28 | 5.98 | 3.35 | 6.33 | 5.59 | 6.97 |

| **Rubber Process Analyzer Data (before cure 100°C, After Cure 60°C)** | | | | | | |
|---|---|---|---|---|---|---|
| Pre-cure Storage Modulus G' at 0.833 Hz (kPa) | 180.8 | 219.0 | 185.8 | 248.6 | 349.3 | 276.6 |
| Storage Modulus G' at 1.0 % (kPa) | 2159.9 | 1963.0 | 2232.2 | 2434.7 | 2742.5 | 2592.4 |
| Storage Modulus G' at 10 % (kPa) | 1594.8 | 1508.6 | 1569.9 | 1760.2 | 1893.4 | 1831.1 |
| Storage Modulus G' at 15 % kPa | 1510.9 | 1428.1 | 1470.9 | 1617.5 | 1750.1 | 1675.9 |
| Storage Modulus G' at 50 %, kPa | 970.0 | 976.0 | 969.1 | 1045.8 | 1045.3 | 1070.8 |
| tan Δ at 10% | 0.143 | 0.134 | 0.153 | 0.154 | 0.157 | 0.155 |

**TABLE 6:Properties of Example 3 Rubber Compositions (Cont.)**

| **Sample** | **20** | **21** | **22** | **23** | **24** |
|---|---|---|---|---|---|
| Silica Type | S14 | S15 | S16 | S17 | S18 |
| **Cure Properties - MDR 150°C** | | | | | |
| Min. Torque (dNm) | 5.14 | 4.03 | 6.05 | 4.54 | 5.33 |
| Max. Torque (dNm) | 24.84 | 18.51 | 25.10 | 18.84 | 22.22 |
| Δ Torque (dNm) | 19.7 | 14.48 | 19.05 | 14.30 | 16.89 |
| T10 (min) | 3.61 | 4.20 | 4.12 | 4.36 | 4.54 |
| T25 (min) | 5.52 | 4.99 | 5.67 | 5.14 | 5.70 |
| T90 (min) | 15.81 | 9.70 | 13.55 | 9.81 | 12.27 |

| **Tensile Properties** | | | | | |
|---|---|---|---|---|---|
| Modulus at 100% Elongation (MPa) | 2.15 | 2.21 | 2.23 | 2.23 | 2.24 |
| Modulus at 300% Elongation (MPa) | 9.50 | 9.94 | 9.57 | 9.75 | 9.53 |
| Tensile stress at Maximum (MPa) | 17.6 | 18.3 | 13.8 | 16.0 | 14.1 |
| Elongation at Break (%) | 471.8 | 476.8 | 393.2 | 432.0 | 399.7 |
| Energy at Max. (J) | 16.86 | 17.12 | 10.59 | 13.91 | 11.15 |
| Energy at 300% Elongation (J) | 5.74 | 5.73 | 5.62 | 5.78 | 5.65 |

| **Rubber Process Analyzer** | | | | | |
|---|---|---|---|---|---|
| Pre-cure Storage Modulus G' at 0.833 Hz | 369.1 | 301.3 | 420.5 | 335.9 | 388.0 |
| Storage Modulus G' at 1% (kPa) | 2843.3 | 1304.0 | 2948.0 | 2347.4 | 2687.7 |
| Storage Modulus G' at 10 % (kPa) | 1945.5 | 1656.0 | 2019.8 | 1692.1 | 1850.5 |
| Storage Modulus G' at 15 %, kPa | 1791.7 | 1526.5 | 1857.3 | 1550.8 | 1709.9 |
| Storage Modulus G' at 50 %, kPa | 1030.5 | 973.2 | 1058.1 | 972.4 | 1024.8 |
| tan Δ at 10% | 0.163 | 0.165 | 0.166 | 0,168 | 0.163 |

Results for the repeat samples S9 and S10 are not shown but indicate that the results are reproducible.

Regarding the cure properties, the exemplary pretreated silica samples have higher maximum torque, indicating improved compound stiffness. Comparing results for samples with and without PEG, suggests that PEG accelerates the cure process.

Regarding the tensile properties, for the Modulus, the Si266-containing samples are similar to the control samples, while the Si69-containing samples without PEG have a lower modulus. For tensile stress, the Si266 samples without PEG have lower tensile stress than the control, while for Si69, all samples are similar to the control. For elongation at break, the Si266 samples without PEG have a lower elongation than the control samples, while for Si69, all samples are higher than the control samples. All samples containing the pretreated silica are equal or better than the control samples for energy at 300%.

The tensile properties can be used to indicate lack of reinforcement and poor dispersion. For example, a low 300% modulus can indicate a lower amount of crosslinking if the delta torque from the MDR data is low or it can indicate a lower amount of reinforcement if the delta torque is sufficient. A low elongation coupled with a low tensile strength can indicate poor dispersion of the filler. Sample number 4 shows a high 300% modulus, coupled with equivalent elongation and a high tensile strength, indicating that this pretreated silica demonstrates superior properties.

From the RPA data, the exemplary pretreated silica (see, e.g., sample 4) has a higher storage modulus, G' and lower tan Δ at 10% than the control samples, indicating that it will have superior handling and better fuel economy when used in a tire tread rubber composition.

Overall, the pretreated samples with PEG mix very well and have good green strength, while the pretreated samples with Si69 but no PEG tended to fracture and have poor green strength.

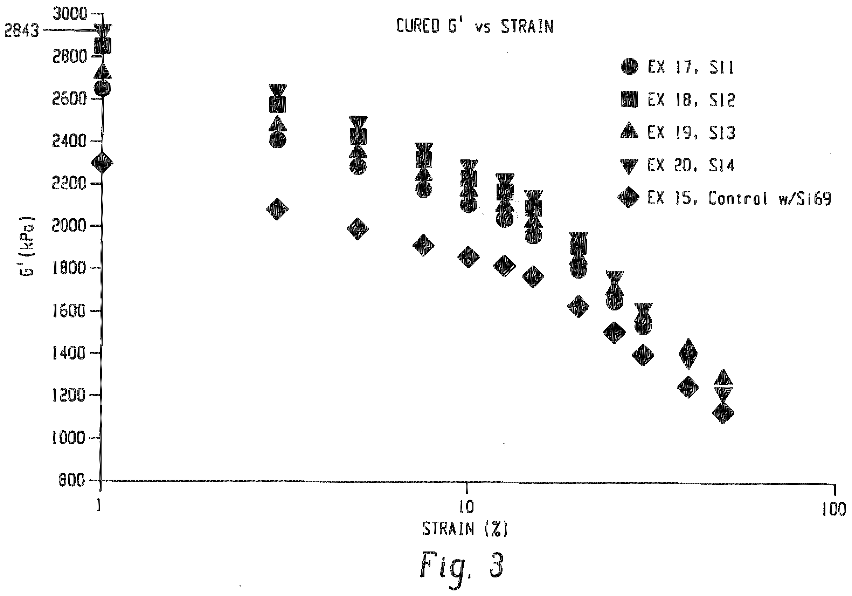

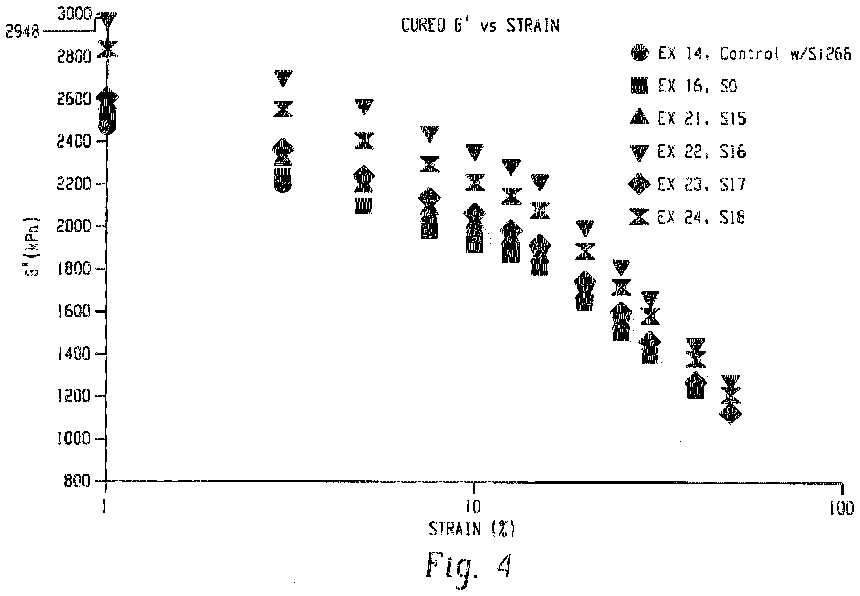

FIGURES 3 and 4 are plots of Storage Modulus G' (before cure at 100°C, after cure at 60°C) vs % strain, for the Example 3 samples.

## Claims

1. A silica material comprising silica particles, an organosilane coupling agent bonded to the silica particles, and polyethylene glycol contacting the silica particles.

2. The silica material of claim 1, wherein the silica particles are precipitated silica and/or wherein the silica particles have a CTAB surface area of at least one of at least 30 m²/g or up to 300 m²/g.

3. The silica material of claim 1 or 2, wherein the silica particles are derived from rice husk ash.

4. The silica material of at least one of the previous claims, wherein the organosilane coupling agent comprises a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group, and, optionally, wherein at least one of the hydrolyzable groups of the first reactive moiety is selected from an alkoxy group and an aminoalkyl group.

5. The silica material of at least one of the previous claims, wherein the coupling agent is selected from bis(trialkoxysilylalkyl) polysulfides, bis(alkoxyaryloxysilylalkyl) polysulfides, bis(triaryloxysilylalkyl) polysulfides, and mixtures thereof.

6. The silica material of at least one of the previous claims, wherein the polyethylene glycol has a molecular weight Mₙ of from 100 to 16,000 or a molecular weight Mₙ of no greater than 600.

7. A rubber composition comprising 100 phr of vulcanizable elastomers; at least 5 phr of the silica material of at least one of the previous claims; a carbon black reinforcing filler; one or more processing aids; and a sulfur-containing cure package.

8. The rubber composition of claim 7, wherein the vulcanizable elastomers comprise a styrene butadiene elastomer and a polybutadiene elastomer.

9. The rubber composition of claim 7 or 8, wherein
(i) reinforcing fillers, other than the carbon black and the silica, are present at no more than 10 phr; and/or wherein
(ii) the at least one processing aid includes at least one of a resin, a wax, and a liquid plasticizer.

10. The rubber composition of at least one of the claims 7 to 9, wherein
(i) the cure package includes a sulfur-based vulcanizing agent and at least one of a cure accelerator, a cure activator, a free radical initiator, and a cure inhibitor; and/or
(ii) the rubber composition further comprises at least one of an antioxidant, an antidegradant, and an antiozonant.

11. A tire tread formed of or comprising the rubber composition of at least one of the claims 7 to 10.

12. A method of forming a silica material, the method comprising:
forming a slurry comprising silica particles, an organosilane coupling agent and polyethylene glycol;
heating the slurry to a temperature at which the organosilane coupling agent bonds with the silica particles; and
drying the heated slurry to form the silica material.

13. The method of claim 12, wherein the organosilane coupling agent and the polyethylene glycol are each present in the slurry in an amount of at least 1 parts per hundred filler.

14. The method of claim 12 or 13, wherein the curing comprises heating the mixture to a temperature of at least 140°C.

15. The method of claim 12, 13 or 14, wherein the method includes forming a tire tread comprising the cured rubber composition.

## Patentansprüche

1. Silica-haltiges Material, das Silica-Partikel, ein Organosilan in Form eines Kupplungsmittels, das an die Silica-Partikel gebunden ist, und Polyethylenglykol, das mit den Silica-Partikeln in Kontakt kommt, umfasst.

2. Silica-haltiges Material nach Anspruch 1, wobei die Silica-Partikel gefällte Silica darstellen und/oder wobei die Silica-Partikel eine CTAB-Oberfläche besitzen, die mindestens einen Wert aufweist, der mindestens 30 m²/g beträgt oder bis zu 300 m²/g beträgt.

3. Silica-haltiges Material nach Anspruch 1 oder 2, wobei die Silica-Partikel aus Reis-Schalenasche abgeleitet sind.

4. Silica-haltiges Material nach mindestens einem der vorhergehenden Ansprüche, wobei das Organosilan in Form eines Kupplungsmittels einen ersten reaktiven Anteil, der ein Siliciumatom und mindestens eine hydrolysierbare Gruppe umfasst, und einen zweiten reaktiven Anteil umfasst, der mit einer Doppelbindung eines vulkanisierbaren Elastomers reagieren kann; wobei der erste und der zweite Anteil durch eine Brückeneinheit verbunden sind, die mindestens eine Gruppe umfasst, die aus einer Polysulfidgruppe und einer Hydroxycarbylengruppe ausgewählt ist; und optional wobei mindestens eine der hydrolysierbaren Gruppen des ersten reaktiven Anteils aus einer Alkoxygruppe und einer Aminoalkylgruppe ausgewählt ist.

5. Silica-haltiges Material nach mindestens einem der vorhergehenden Ansprüche, wobei das Kupplungsmittel ausgewählt ist aus Bis(trialcoxysilylalkyl)polysulfiden, Bis(alkoxyaryloxysilylalkyl) polysulfiden, Bis(triaryloxysilylalkyl)polysulfiden sowie deren Mischungen.

6. Silica-haltiges Material nach mindestens einem der vorhergehenden Ansprüche, wobei das Polyethylenglykol ein Molekulargewicht Mₙ von 100 bis 16.000 oder ein Molekulargewicht Mₙ von nicht mehr als 600 besitzt.

7. Kautschukzusammensetzung, die Folgendes umfasst: 100 ThK vulkanisierbare Elastomere; mindestens 5 ThK des Silica-haltigen Materials nach mindestens einem der vorstehenden Ansprüche; einen Füllstoff zur Verstärkung des Kautschuks auf der Grundlage von Ruß; einen oder mehrere Verarbeitungshilfsmittel; sowie einen schwefelhaltigen Satz von Vulkanisationsmitteln.

8. Kautschukzusammensetzung nach Anspruch 7, wobei die vulkanisierbaren Elastomere ein Styrol-Butadien-Elastomer und ein Polybutadien-Elastomer umfassen.

9. Kautschukzusammensetzung nach Anspruch 7 oder 8, wobei
(i) Füllstoffe zur Verstärkung, die nicht aus Ruß oder Silica bestehen, in einer Menge von nicht mehr als 10 ThK vorhanden sind; und/oder wobei
(ii) der mindestens eine Verarbeitungshilfsstoff mindestens einen Hilfsstoff umfasst, der aus einem Harz, einem Wachs und einem flüssigen Weichmacher ausgewählt ist.

10. Kautschukzusammensetzung nach mindestens einem der Ansprüche 7 bis 9, wobei
(i) der Satz von Vulkanisationsmitteln das Folgende umfasst: ein Vulkanisationsmittel auf der Grundlage von Schwefel und mindestens ein Element, das aus einem Vulkanisationsbeschleuniger, einem Vulkanisationsaktivator, einem Radikalinitiator und einem Vulkanisationsinhibitor ausgewählt ist; und/oder
(ii) die Kautschukzusammensetzung zusätzlich mindestens ein Element umfasst, das aus einem Antioxidationsmittel, einem Schutzmittel und einem Ozon-Schutzmittel ausgewählt ist.

11. Lauffläche eines Reifens, die aus der Kautschukzusammensetzung nach mindestens einem der Ansprüche 7 bis 10 ausgebildet ist oder diese umfasst.

12. Verfahren zur Herstellung eines Silica-haltigen Materials, wobei das Verfahren das Folgende umfasst:
das Herstellen einer Suspension, die Silica-Partikel, ein Organosilan in Form eines Kupplungsmittels und Polyethylenglykol umfasst;
das Erhitzen der Suspension auf eine Temperatur, bei der das Organosilan in Form eines Kupplungsmittels an die Silica-Partikel bindet; und
das Trocknen der erhitzten Suspension, um das Silica-haltige Material zu erzielen.

13. Verfahren nach Anspruch 12, wobei das Organosilan in Form eines Kupplungsmittels und das Polyethylenglykol jeweils in der Suspension in einer Menge von mindestens 1 Teil pro 100 Teile Füllstoff vorhanden sind.

14. Verfahren nach Anspruch 12 oder 13, wobei die Vulkanisierung das Erhitzen der Mischung auf eine Temperatur von mindestens 140 °C umfasst.

15. Verfahren nach Anspruch 12, 13 oder 14, wobei das Verfahren das Bilden einer Lauffläche für einen Reifen umfasst, die die Kautschukzusammensetzung in vulkanisiertem Zustand umfasst.

## Revendications

1. Matériau siliceux qui comprend des particules de silice, un organosilane à titre d'agent de couplage, qui est lié aux particules de silice, et du polyéthylène glycol qui entre en contact avec les particules de silice.

2. Matériau siliceux selon la revendication 1, dans lequel les particules de silice représentent de la silice précipitée et/ou dans lequel les particules de silice possèdent une aire de surface CTAB qui représente au moins une valeur qui est égale à au moins 30 m²/g ou qui s'élève jusqu'à 300 m²/g.

3. Matériau siliceux selon la revendication 1 ou 2, dans lequel les particules de silice dérivent de la cendre de balle de riz.

4. Matériau siliceux selon au moins une des revendications précédentes, dans lequel l'organosilane faisant office d'agent de couplage comprend une première fraction réactive qui englobe un atome de silicium et au moins un groupe hydrolysable, et une deuxième fraction réactive capable d'entrer en réaction avec une liaison double d'un élastomère vulcanisable ; dans lequel la première et la deuxième fraction sont reliées par une unité faisant pont qui comprend au moins un groupe choisi parmi un groupe polysulfure et un groupe hydroxycarbylène ; et, de manière facultative, dans lequel au moins un des groupes hydrolysables de la première fraction réactive est choisi parmi un groupe alcoxy et un groupe aminoalkyle.

5. Matériau siliceux selon au moins une des revendications précédentes, dans lequel l'agent de couplage est choisi parmi des bis(trialcoxysilylalkyl) polysulfures, des bis(alcoxyaryloxysilylalkyl) polysulfures, des bis(triaryloxysilylalkyl) polysulfures, ainsi que leurs mélanges.

6. Matériau siliceux selon au moins une des revendications précédentes, dans lequel le polyéthylène glycol possède un poids moléculaire Mₙ qui s'élève de 100 à 16.000 ou un poids moléculaire Mₙ qui n'est pas supérieur à 600.

7. Composition de caoutchouc qui comprend 100 phr d'élastomères vulcanisables ; au moins 5 phr du matériau siliceux selon au moins une des revendications précédentes ; une matière de charge pour le renforcement du caoutchouc à base de noir de carbone ; un ou plusieurs adjuvants de traitement ; ainsi qu'un ensemble de vulcanisation contenant du soufre.

8. Composition de caoutchouc selon la revendication 7, dans laquelle les élastomères vulcanisables comprennent un élastomère de styrène butadiène et un élastomère de polybutadiène.

9. Composition de caoutchouc selon la revendication 7 ou 8, dans laquelle :
(i) des matières de charge pour le renforcement, autres que le noir de carbone de la silice, sont présentes en une quantité qui n'est pas supérieure à 10 phr ; et/ou dans laquelle
(ii) ledit au moins un adjuvant de traitement englobe au moins un adjuvant qui est choisi parmi une résine, une cire et un plastifiant liquide.

10. Composition de caoutchouc selon au moins une des revendications 7 à 9, dans laquelle :
(i) l'ensemble de vulcanisation englobe un agent de vulcanisation à base de soufre et au moins un élément qui est choisi parmi un accélérateur de la vulcanisation, un activateur de la vulcanisation, un initiateur de radicaux libres et un inhibiteur de la vulcanisation ; et/ou
(ii) la composition de caoutchouc comprend en outre au moins un élément qui est choisi parmi un antioxydant, un agent protecteur et un agent anti-ozone.

11. Bande de roulement pour un bandage, qui est réalisée à partir de la composition de caoutchouc selon au moins une des revendications 7 à 10, ou qui comprend ladite composition.

12. Procédé de formation d'un matériau siliceux, le procédé comprenant le fait de :
préparer une suspension qui comprend des particules de silice, un organosilane faisant office d'agent de couplage et du polyéthylène glycol ;
chauffer la suspension jusqu'à une température à laquelle l'organosilane faisant office d'agent de couplage se lie aux particules de silice ; et
sécher la suspension qui a été chauffée afin d'obtenir le matériau siliceux.

13. Procédé selon la revendication 12, dans lequel l'organosilane faisant office d'agent de couplage et le polyéthylène glycol sont chacun présents dans la suspension en une quantité qui s'élève à au moins 1 partie par cent parties de la matière de charge.

14. Procédé selon la revendication 12 ou 13, dans lequel la vulcanisation comprend le fait de chauffer le mélange jusqu'à une température qui s'élève à au moins 140 °C.

15. Procédé selon la revendication 12, 13 ou 14, dans lequel le procédé englobe le fait de former une bande de roulement pour un bandage, qui comprend la composition de caoutchouc à l'état vulcanisé.
